# EUROPÄISCHE PATENTSCHRIFT

(11) **EP 1 352 045 B1**
(45) Veröffentlichungstag und Bekanntmachung des Hinweises auf die Patenterteilung: **11.10.2006**
(21) Anmeldenummer: 02732120.7
(22) Anmeldetag: 09.01.2002
(51) Int. Cl.: C11D 1/37, C11D 1/65, C11D 1/83, C11D 11/00, C07C 231/02, B01F 17/00

(54) **TENSIDGEMISCH**
DETERGENT MIXTURE
MELANGE TENSIOACTIF

(30) Priorität: 18.01.2001 DE 10102006
(43) Veröffentlichungstag der Anmeldung: 15.10.2003
(73) Patentinhaber: Cognis IP Management GmbH, 40589 Düsseldorf (DE)
(72) Erfinder: RATHS, Hans-Christian, 40789 Monheim (DE); SCHMID, Karl, Heinz, 40822 Mettmann (DE); RÜBEN, Rainer, 40789 Monheim (DE)
(86) Internationale Anmeldenummer: PCT/EP2002/000127
(87) Internationale Veröffentlichungsnummer: WO 2002/057399

(56) Entgegenhaltungen:
- EP-A- 0 827 950
- EP-A- 0 857 717
- WO-A-92/06071
- WO-A-94/27561
- WO-A-97/03043
- WO-A-97/16409
- DE-A- 19 619 956
- PATENT ABSTRACTS OF JAPAN vol. 017, no. 442 (C-1097), 16. August 1993 (1993-08-16) & JP 05 097787 A (KAO CORP), 20. April 1993 (1993-04-20)
- DATABASE WPI Section Ch, Week 198807 Derwent Publications Ltd., London, GB; Class D21, AN 1988-045827 XP002028870 & JP 63 002962 A (KAWAKEN FINE CHEM CO LTD), 7. Januar 1988 (1988-01-07)
- PATENT ABSTRACTS OF JAPAN vol. 012, no. 092 (C-483), 25. März 1988 (1988-03-25) & JP 62 226921 A (LION CORP), 5. Oktober 1987 (1987-10-05)

## Beschreibung

### Gebiet der Erfindung

Die Erfindung betrifft spezielle Tensidgemische, welche durch Umsetzung von Aminosäuren mit Fettsäurehalogeniden in Gegenwart von anderen acylierbaren Verbindungen als Tensidvorläufer und/oder nichtionischen Tensiden in wässriger, alkalischer Lösung erhalten werden, ein Verfahren zu deren Herstellung sowie deren Verwendung als Reinigungs- und Schäumungsmittel sowie als Emulgator.

### Stand der Technik

Aus dem Stand der Technik sind N-Acylaminosäuren, wie beispielsweise N-Acylglutamate, als milde Co-Tenside für den Einsatz in kosmetischen Zubereitungen bekannt. Sie werden durch Umsetzung von Fettsäurechloriden mit der Aminogruppe des Glutaminsäure-Natriumsalzes in Gegenwart von Basen, wie z.B. NaOH, in wässrigem Medium hergestellt. Nachteilig an diesem Verfahren ist, dass das lipophile Fettsäurechlorid mit der hydrophilen Aminosäure bzw. dem zugrunde liegenden Salz in wässrigem Medium nur schwer zur Reaktion zu bringen ist. Diesem Problem versucht man durch Zugabe von wassermischbaren organischen Lösungsmitteln wie beispielsweise Aceton, Methylethylketon, Dioxan, Polyolen, Tetrahydrofuran, i-Propanol, t.-Butanol oder Cyclohexan aus dem Weg zu gehen. Diese Lösungsmittel müssen jedoch zum Teil in sehr zeitaufwendigen und kostenintensiven Verfahren wieder aus dem Reaktionsgemisch entfernt werden.

Dementsprechend sollte ein Verfahren zur Verfügung gestellt werden, welches die Umsetzung von Aminosäuren mit Fettsäurehalogeniden erlaubt, ohne dass der Zusatz von Lösungsmitteln und deren kostenintensive Entfernung zwingend erforderlich ist.

Aus der europäischen Patentschrift **EP 0827950 A1** ist die Acylierung ohne Zusatz von Lösungsmitteln jedoch unter Anwendung hoher Rührenergie bekannt. Nachteilig bei diesem Verfahren ist die starke Schaumbildung, so dass dieses Verfahren für grosstechnische Zwecke ungeeignet erscheint.

Die WO 94/27561 offenbart ein Tensidgemisch, welches dadurch erhalten wird, dass Natriumsarkosinat oder Sarkosin mit Lauroyl-bzw. Palmitoyl-delorid in gegenwert von hydrolysierten weizenprotein, wasser und Natriumhydroxid umgesetzt wird. Verwendung finden diese gemische in Shampoos oder als Emulgatoren in Cremes.

Die Aufgabe der vorliegenden Erfindung hat darin bestanden, Acylaminosäuren zur Verfügung zu stellen, die sich durch ein besonders kostengünstiges Verfahren, bei dem der Zusatz von Lösungsmitteln nicht zwingend erforderlich ist; herstellen lassen. Des weiteren sollten die Probleme der Schaumbildung durch Rühren gelöst werden.

Gegenstand der vorliegenden Erfindung ist ein Tensidgemisch, welches man dadurch erhält, dass man
(a) mindestens eine Aminosäure oder deren Salz mit
(b) Fettsäurehalogeniden der Formel (I),

   **R**^{**1**}**COX** **(I)**

   in der R¹ für einen Alkyl- oder Alkenylrest mit 6 bis 22 Kohlenstoffatomen und X für Chor, Brom, Jod steht, in Gegenwart von
(c) acylierbaren Tensidvorstufen, die ausgewählt sind aus der Gruppe, die gebildet wird von Proteinhydrolysaten mit einem durchischmittlichen Molekulargewicht von 300 bis 2500 Polyaminosäuren, Aminosulfonsäuren und/oder Aminozucker und/oder
(d) nichtionischen Tensiden sowie Wasser alkali in einer Kreislaufleitung mit Mischer umsetzt, wobei das Säurechlorid in oder vor dem Mischer dosiert wird.

Ein weiterer Gegenstand der Erfindung betrifft ein Verfahren zur Herstellung eines Tensidgemisches, welches dadurch gekennzeichnet ist, dass man
(a) mindestens eine Aminosäure oder deren Salz mit
(b) Fettsäurehalogeniden der Formel (I),

   **R**^{**1**}**COX** **(I)**

   in der R¹ für einen Alkyl- oder Alkenylrest mit 6 bis 22 Kohlenstoffatomen und X für Chor, Brom Jod steht, in Gegenwart von
(c) acylierbaren Tensidvorstufen, die ausgewählt sind aus der Gruppe, die gebildet wird von Proteinhydrolysaten mit einem mittleren Molekules gewicht von 300 bis 2500 Polyaminosäuren, Aminosulfonsäuren und/oder Aminozucker und/oder
(d) nichtionischen Tensiden sowie Wasser und Alkali in einer Kreislaufleitung mit Mischer umsetzt, wobei das Säurechlorid in oder vor dem Mischer dosiert wird.

ÜberraschenderweCilse wurde gefunden, dass man Acylaminosäuren in hohen Ausbeuten erhält, indem man Aminosäuren mit Fettsäurehalogeniden in Gegenwart von anderen acylierbaren Verbindungen, wie beispielsweise Proteinhydrolysaten, und/oder nichtionischen Tensiden im alkalischen Millieu umsetzt. Diese acylierbaren Verbindungen weisen nach Umsetzung mit den Fettsäurehalogeniden ebenfalls tensidische Eigenschaften auf und müssen somit nicht mehr aus der Reaktionsmischung entfernt werden, sondern können direkt als "Compound" in kosmetischen Zubereitungen eingesetzt werden. Dieser Vorteil ist ebenfalls beim Zusatz von nichtionischen Tensiden zu verzeichnen. Darüber hinaus ist dieses Verfahren ebenfalls zur grosstechnischen Herstellung von Acylglutamaten geeignet, da die Emulgierung des Säurechlorids in einer Kreislaufleitung mit Mischer erfolgt. Der Einsatz des Mischers hat zur Folge, dass ein zu starkes Rühren unter Luftzutritt im Reaktor vermieden wird und keine Probleme aufgrund zu hoher Schaumbildung auftreten.

Da kein Lösungsmittel oder andere Nebenprodukte aus der Reaktionsmischung entfernt werden müssen, ist das Verfahren im Vergleich zum Stand der Technik relativ kostengünstig. Weiterhin wurde gefunden, dass die erfindungsgemässen Tensidgemische nicht nur gute Reinigungs- und Schäumungseigenschaften aufweisen, sondern sich darüber hinaus ebenfalls als Emulgatoren eignen.

### Aminosäuren oder deren Salz

Als Aminosäuren oder deren Salze kommen im Sinne der Erfindung alle dem Fachmann aus der Literatur bekannten α-Aminosäuren in Frage, welche mit Fettsäurehalogeniden zu N-Acylaminosäuren acyliert werden können. Vorzugsweise kommen als Aminosäuren Glutaminsäure, Sarkosin, Asparaginsäure, Alanin, Lysin, Valin, Leucin, Isoleucin, Prolin, Hydroxyprolin, Glycin, Serin, Cystein, Cystin, Threonin, Histidin sowie deren Salze und insbesondere Lysin, Glycin, Glutaminsäure Sarkosin, Asparaginsäure sowie deren Mononatriumsalz in Frage. Die Aminosäuren können in optisch reiner Form oder als racemische Gemische eingesetzt werden.

Die Aminosäuren oder deren Salze werden bei der erfindungsgemässen Herstellung der Tensidgemische in Mengen von 20 bis 70, vorzugsweise 35 bis 60 und insbesondere 40 bis 50 Gew.-% - bezogen auf die Startmischung -, d.h. vor Säurechloridzugabe, eingesetzt.

### Fettsäurehalogenide

Zur Herstellung der erfindungsgemässen Tensidgemische werden Fettsäurehalogenide, welche die Komponente (b) bilden, der Formel (1),

**R**^{**1**}**COX** **(I)**

eingesetzt, in der R¹ für einen Alkyl- oder Alkenylrest mit 6 bis 22, vorzugsweise 8 bis 18 und insbesondere 12 bis 16 Kohlenstoffatomen und X für Chor, Brom oder Jod und vorzugsweise Chlor steht. Typische Säurehalogenide sind Nonanoylchlorid, Decanoylchlorid, Undecanoylchlorid, Lauroylchlorid, Tridecanoylchlorid, Myristoylchlorid, Palmitoylchlorid, Stearoylchlorid, Oleoylchlorid und auch deren Gemische.

Die Fettsäurehalogenide werden bei der erfindungsgemässen Herstellung der Tensidgemische im Molverhältnis acylierbare Verbindung : Säurehalogenid = 1 bis 1,5 und vorzugsweise von 1,15 bis 1,3 Gew.-% eingesetzt.

### Acylierbare Tensidvorstufen

Diese sogenannten acylierbaren Tensidvorstufen sind Verbindungen, welche in Ermangelung eines hydrophoben Restes zunächst keine Tenside darstellen (Tensidvorstufen), die jedoch aufgrund ihrer im Molekül vorhandenen Aminogruppe(n) mit Fettsäurehalogeniden (Komponente b) durch Acylierung in Verbindungen mit tensidischen Eigenschaften überführt werden können (acylierte Tensidvorstufen). Als acylierbare Tensidvorstufen kommen im Sinne der Erfindung Proteinhydrolysate, mit einem durchsmittlichen Molekulargewicht von 300 bis 2500 Polyaminosäuren Aminosulfonsäuren und/oder Aminozucker in Frage.

Die acylierbaren Tensidvorstufen werden bei der erfindungsgemässen Herstellung der Tensidgemische in Mengen von 0,1 bis 20, vorzugsweise 1 bis 10 und insbesondere 3 bis 6 Gew.-% eingesetzt.

### Proteinhydrolysate

Proteinhydrolysate stellen Abbauprodukte von tierischen oder pflanzlichen Proteinen, beispielsweise Collagen, Elastin, Casein, Algen, Seide oder Keratin und vorzugsweise Weizen-, Reis-, Soja-, Mandel-Proteinhydrolysate im Sinne der Erfindung sind Abbauprodukte von pflanzlichen Proteinen wie z.B. Weizen-, Reis-, Soja-, Sonnenblumen-, Mandel- und Kartoffelprotein, von marinen Proteinen wie z.B. Algen- oder Protein von Meerestieren, von Milch- Seide- und Cashmereproteinen sowie von tierischen Proteinen wie z.B. Collagen, Elastin, Casein, Keratin und vorzugsweise von Weizen-, Reis-, Soja-, Sonnenblumen-, Mandel-, Kartoffel-, Algen-, Seide- und Cashmereproteinen und insbesondere Weizen-, Reis-, Soja-, Sonnenblumen-, Mandel- und Kartoffelprotein, die durch saure, alkalische und/oder enzymatische Hydrolyse gespalten werden und danach ein durchschnittliches Molekulargewicht im Bereich 300 bis 2500 und insbesondere 400 bis 1200 aufweisen. Proteinhydrolysate stellen keine Tenside dar, sie können jedoch durch Acylierung mit Fettsäurehalogeniden in Proteinkondensate überführt werden, welche tensidische Eigenschaften besitzen. Auch Oligopeptide, die synthetisch zugänglich sind fallen unter diesen Anspruch.

Übersichten zu Herstellung und Verwendung von Proteinhydrolysaten sind beispielsweise von G. Schuster und A. Domsch in **Seifen Öle Fette Wachse 108, 177 (1982)** bzw. **Cosm.Toil. 99, 63 (1984),** von H. W. Steisslinger in **Parf.Kosm. 72, 556 (1991)** und F. Aurich et al. in **Tens.Surf.Det. 29, 389 (1992)** erschienen. Vorzugsweise werden pflanzliche Proteinhydrolysate auf Basis von Weizengluten oder Reisprotein eingesetzt, deren Herstellung in den beiden deutschen Patentschriften **DE 19502167 C1** und **DE 19502168 C1** beschrieben wird.

### Polyaminosäuren

Als Polyaminosäuren kommen alle dem Fachmann bekannten polymeren Aminosäuren in Frage, die acylierbare Aminogruppen aufweisen. Durch Acylierung können dieser Polyaminosäuren, die selbst keine Tenside darstellen, in Verbindungen mit tensidischen Eigenschaften überführt werden. Vorzugsweise werden als Polyaminosäuren Polyasparaginsäure mit Oligomerisationsgraden von 2 bis 10 und insbesondere von 2 bis 5 eingesetzt.

### Aminosulfonsäuren

Aminosulfonsäuren können durch Acylierung der Aminogruppe mit Fettsäurehalogeniden in anionische Tenside überführt werden, so dass sie ebenfalls als acylierbare Tensidvorstufen in Frage kommen. Im Sinne der Erfindung fallen unter die Definition der Aminosulfonsäuren als acylierbare Tensidvorstufen alle dem Fachmann aus der Literatur bekannten Aminosulfonsäuren. Vorzugsweise werden Methyltaurin oder Taurin eingesetzt.

### Aminozucker

Aminozucker können durch Acylierung der Aminogruppe mit Fettsäurehalogeniden in anionische Tenside überführt werden, so dass sie ebenfalls als acylierbare Tensidvorstufen in Frage kommen. Im Sinne der Erfindung fallen unter die Definition der Aminozucker als acylierbare Tensidvorstufen alle dem Fachmann aus der Literatur bekannten Aminozucker. Vorzugsweise werden Glucamin/Glucosamin oder Galactosamin eingesetzt. Ebenfalls geeignet sind auch Oligo-Aminozucker mit Oligomerisationsgraden von 2 bis 10 und insbesondere von 2 bis 5.

### Nichtionische Tenside

Als nichtionische Tenside kommen beispielsweise nichtionogene Tenside aus mindestens einer der folgenden Gruppen in Frage:
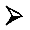 Anlagerungsprodukte von 2 bis 30 Mol Ethylenoxid und/ oder 0 bis 5 Mol Propylenoxid an lineare oder verzweigte, Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
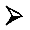 Alkyl- und/oder Alkenyloligoglykoside mit 8 bis 22 Kohlenstoffatomen im Alk(en)ylrest und deren ethoxylierte Analoga;
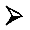 Anlagerungsprodukte von 1 bis 30 Mol Ethylenoxid an Fettsäuren;
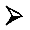 Einschubprodukte von 1 bis 30 Mol Ethylenoxid in Fettsäuremethylester;
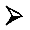 Anlagerungsprodukte von 1 bis 15 Mol Ethylenoxid an Ricinusöl und/oder gehärtetes Ricinusöl;
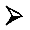 Anlagerungsprodukte von 15 bis 60 Mol Ethylenoxid an Ricinusöl und/oder gehärtetes Ricinusöl;
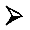 Partialester von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
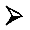 Partialester von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
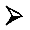 Mischester aus Pentaerythrit, Fettsäuren, Citronensäure und Fettalkohol gemäß DE 1165574 PS und/oder Mischester von Fettsäuren mit 6 bis 22 Kohlenstoffatomen, Methylglucose und Polyolen, vorzugsweise Glycerin oder Polyglycerin.
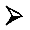 Mono-, Di- und Trialkylphosphate sowie Mono-, Di- und/oder Tri-PEG-alkylphosphate und deren Salze;
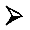 Wollwachsalkohole;
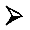 Polysiloxan-Polyalkyl-Polyether-Copolymere bzw. entsprechende Derivate;
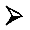 Polyalkylenglycole sowie
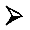 Glycerincarbonat.

Die Anlagerungsprodukte von Ethylenoxid und/oder von Propylenoxid an Fettalkohole, Fettsäuren, Alkylphenole oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus DE 2024051 PS als Rückfettungsmittel für kosmetische Zubereitungen bekannt.

Alkyl- und/oder Alkenyloligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 Kohlenstoffatomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

Typische Beispiele für geeignete Partialglyceride sind Hydroxystearinsäuremonoglycerid, Hydroxystearinsäurediglycerid, Isostearinsäuremonoglycerid, Isostearinsäurediglycerid, Ölsäuremonoglycerid, Ölsäurediglycerid, Ricinolsäuremoglycerid, Ricinolsäurediglycerid, Linolsäuremonoglycerid, Linolsäurediglycerid, Linolensäuremonoglycerid, Linolensäurediglycerid, Erucasäuremonoglycerid, Erucasäurediglycerid, Weinsäuremonoglycerid, Weinsäurediglycerid, Citronensäuremonoglycerid, Citronendiglycerid, Äpfelsäuremonoglycerid, Äpfelsäurediglycerid sowie deren technische Gemische, die untergeordnet aus dem Herstellungsprozeß noch geringe Mengen an Triglycerid enthalten können. Ebenfalls geeignet sind Anlagerungsprodukte von 1 bis 30, vorzugsweise 5 bis 10 Mol Ethylenoxid an die genannten Partialglyceride.

Als Sorbitanester kommen Sorbitanmonoisostearat, Sorbitansesquiisostearat, Sorbitandiisostearat, Sorbitantriisostearat, Sorbitanmonooleat, Sorbitansesquioleat, Sorbitandioleat, Sorbitantrioleat, Sorbitanmonoerucat, Sorbitansesquierucat, Sorbitandierucat, Sorbitantrierucat, Sorbitanmonoricinoleat, Sorbitansesquiricinoleat, Sorbitandiricinoleat, Sorbitantriricinoleat, Sorbitanmonohydroxystearat, Sorbitansesquihydroxystearat, Sorbitandihydroxystearat, Sorbitantrihydroxystearat, Sorbitanmonotartrat, Sorbitansesquitartrat, Sorbitanditartrat, Sorbitantritartrat, Sorbitanmonocitrat, Sorbitansesquicitrat, Sorbitandicitrat, Sorbitantricitrat, Sorbitanmonomaleat, Sorbitansesquimaleat, Sorbitandimaleat, Sorbitantrimaleat sowie deren technische Gemische. Ebenfalls geeignet sind Anlagerungsprodukte von 1 bis 30, vorzugsweise 5 bis 10 Mol Ethylenoxid an die genannten Sorbitanester.

Typische Beispiele für geeignete Polyglycerinester sind Polyglyceryl-2 Dipolyhydroxystearate (Dehymuls® PGPH), Polyglycerin-3-Diisostearate (Lameform® TGI), Polyglyceryl-4 Isostearate (Isolan® Gl 34), Polyglyceryl-3 Oleate, Diisostearoyl Polyglyceryl-3 Diisostearate (Isolan® PDI), Polyglyceryl-3 Methylglucose Distearate (Tego Care® 450), Polyglyceryl-3 Beeswax (Cera Bellina®), Polyglyceryl-4 Caprate (Polyglycerol Caprate T2010/90), Polyglyceryl-3 Cetyl Ether (Chimexane® NL), Polyglyceryl-3 Distearate (Cremophor® GS 32) und Polyglyceryl Polyricinoleate (Admul® WOL 1403) Polyglyceryl Dimerate Isostearate sowie deren Gemische.

Beispiele für weitere geeignete Polyolester sind die gegebenenfalls mit 1 bis 30 Mol Ethylenoxid umgesetzten Mono-, Di- und Triester von Trimethylolpropan oder Pentaerythrit mit Laurinsäure, Kokosfettsäure, Talgfettsäure, Palmitinsäure, Stearinsäure, Ölsäure, Behensäure und dergleichen. Vorzugsweise werden im Sinne der Erfindung Alkyl- und/oder Alkenyloligoglykoside eingesetzt. Die nichtionischen Tenside werden bei der erfindungsgemässen Herstellung der Tensidgemische in Mengen von 0,1 bis 20, vorzugsweise 1 bis 10 und insbesondere 2 bis 6 Gew.-% eingesetzt.

### Polyole

In einer besonderen Ausführungsform der Erfindung können als weitere Komponente 0 bis 15, vorzugsweise 2 bis 9 und insbesondere 5 bis 7 Gew.-% Polyole zusetzt werden, wie beispielsweise Glycerin, Ethylenglycol, Propylenglycol, Dipropylenglycol, 1,3 Butylenglycol, 1,2-Butandiol, 1,4-Butandiol, Sorbitol, Mannitol, Erythritol, Pentaerythritol.

### Verfahren

Zur Herstellung des erfindungsgemässen Tensidgemisches wird zunächst eine wässrige mindestens 20, vorzugsweise > 40 gew.-%ige Lösung des Di-Natriumsalzes der Aminosäure, vorzugsweise eine >40 gew-%ige wässrige Di-Natriumglutamat- oder Di-Natriumasparaginat-Lösung hergestellt. Hierzu wird die entsprechende Menge mindestens einer Aminosäure oder deren Salz mit Wasser und mindestens einer wässrigen Alkalilösung, vorzugsweise Natronlauge, unter Rühren im Reaktionsbehälter zusammengegeben - gegebenenfalls unter Erwärmen bis zu einer Temperatur von 40 bis 50°C - und gerührt bis eine klare Lösung entsteht, die einen pH-Wert von 11,5 bis 12,5 aufweist. Als wässrige Alkalilösung kommen insbesondere Natriumhydroxid, Kaliumhydroxid, Natriumcarbonat und Ammoniak in Betracht.

Zu dieser Reaktionsmischung, die 20 bis 70, vorzugsweise 35 bis 60 und insbesondere 40 bis 55 Gew.-% der Aminsäure bzw. deren Salzes enthält, werden 0,1 bis 20, vorzugsweise 1 bis 10 und insbesondere 3 bis 6 Gew.-% des acylierberen Tensidvorläufers und/oder 0,1 bis 20, vorzugsweise 2 bis 15 und/oder insbesondere 5 bis 10 Gew.-% des nichtionischen Tensids hinzugefügt. In einer besonderen Ausführungsform der Erfindung können als weitere Komponente 0 bis 15, vorzugsweise 2 bis 9 und insbesondere 5 bis 7 Gew.-% Polyole zusetzt werden, wie beispielsweise Glycerin, Ethylenglycol, Propylenglycol, Dipropylenglycol, 1,3 Butylenglycol, 1,2-Butandiol, 1,4-Butandiol, Sorbitol, Mannitol, Erythritol, Pentaerythritol.

Nach Abkühlen der Lösung auf ca. 10 bis 20 °C werden langsam im Molverhältnis acylierbare Verbindung / Säurehalogenid = 1 : 1 bis 1 : 1,5 besonders bevorzugt von 1 : 1,15 bis 1 : 1,25% Fettsäurehalogenid und gleichzeitig Alkali hinzugegeben, so dass der pH-Wert der Reaktionsmischung zwischen 11,5 bis 12,5 gehalten wird. Die Temperatur im Reaktionskessel soll dabei 15 bis 25 °C nicht übersteigt. Typische Dosierzeiten sind ca. 2 bis 8 Stunden.

Die Emulgierung des Säurechlorids erfolgt in einer Kreislaufleitung mit Mischer, wobei das Säurechlorid bevorzugt in oder vor den Mischer dosiert wird. Dieses Verfahren hat gegenüber einer Dosierung in den Kessel den Vorzug, dass die lokale Konzentration des Säurechlorids hoch ist und dass eine sehr feine Emulsion hergestellt werden kann. Ausserdem wird sichergestellt, dass eine zu starke Verschäumung des Produktes im Kessel vermieden wird.

Nach Zugabe des Fettsäurehafogenids rührt man im Reaktionsbehälter noch ca. 2 Stunden bei ca. 20 bis 25 °C nach, erhitzt dann weitere ca. 2 Stunden auf ca. 60 bis 80 °C und stellt dann den pH-Wert des Reaktionsgemisches auf den gewünschten Wert, vorzugsweise 9 bis 10, und den gewünschten Wassergehalt ein.

Alternativ hierzu kann auch eine Aufarbeitung über Ansäuern und Phasentrennung/Wäsche oder Filtration/Wäsche erfolgen.

### Gewerbliche Anwendbarkeit

In einer bevorzugten Ausführungsform der Erfindung können zu den erfindungsgemässen Tensidgemischen weitere Mengen der nichtionischen Tenside, wie sie zuvor beschrieben wurden, zugesetzt werden. Die erfindungsgemässen Tensidgemische zeigen hervorragende Reinigungs- und Schaumeigenschaften. Des weiteren können Sie ebenfalls ale Emulgatoren eingesetzt werden. Demnach ist ein weiterer Gegenstand der Erfindung auf die Verwendung des erfindungsgemässen Tensidgemisches als Emulgator, Schäumungs- und Reinigungsmittel gerichtet.

Die erfindungsgemässen Tensidgemische können in oberflächenaktiven Zubereitungen, wie beispielsweise Wasch- und Spülmittel, Haushaltsreiniger sowie kosmetische und/oder pharmazeutische Zubereitungen verwendet werden, welche als weitere Hilfs- und Zusatzstoffe Perlglanzwachse, Konsistenzgeber, Verdickungsmittel, Überfettungsmittel, Stabilisatoren, Siliconverbindungen, Fette, Wachse, Lecithine, Phospholipide, Antioxidantien, Deodorantien, Antitranspirantien, Antischuppenmittel, Quellmittel, Tyrosininhibitoren, Hydrotrope, Solubilisatoren, Konservierungsmittel, Parfümöle, Farbstoffe, weitere Tenside und dergleichen enthalten können. Als kosmetische und/oder pharmazeutische Reinigungsmittel kommen beispielsweise Haarshampoos, Haarlotionen, Schaumbäder, Duschbäder, Cremes, Gele, Lotionen, alkoholische und wässrig/alkoholische Lösungen und Emulsionen in Frage.

### Wachse

Als Wachse kommen u.a. natürliche Wachse, wie z.B. Candelillawachs, Carnaubawachs, Japanwachs, Espartograswachs, Korkwachs, Guarumawachs, Reiskeimölwachs, Zuckerrohrwachs, Ouricurywachs, Montanwachs, Bienenwachs, Schellackwachs, Walrat, Lanolin (Wollwachs), Bürzelfett, Ceresin, Ozokerit (Erdwachs), Petrolatum, Paraffinwachse, Mikrowachse; chemisch modifizierte Wachse (Hartwachse), wie z.B. Montanesterwachse, Sasolwachse, hydrierte Jojobawachse sowie synthetische Wachse, wie z.B. Polyalkylenwachse und Polyethylenglycolwachse in Frage. Neben den Fetten kommen als Zusatzstoffe auch fettähnliche Substanzen, wie Lecithine und Phospholipide in Frage. Unter der Bezeichnung Lecithine versteht der Fachmann diejenigen Glycero-Phospholipide, die sich aus Fettsäuren, Glycerin, Phosphorsäure und Cholin durch Veresterung bilden. Lecithine werden in der Fachwelt daher auch häufig als Phosphatidylcholine (PC) bezeichnet und folgen der allgemeinen Formel, 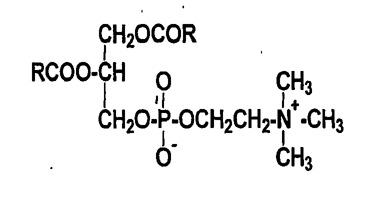 wobei R typischerweise für lineare aliphatische Kohlenwasserstoffreste mit 15 bis 17 Kohlenstoffatomen und bis zu 4 cis-Doppelbindungen steht. Als Beispiele für natürliche Lecithine seien die Kephaline genannt, die auch als Phosphatidsäuren bezeichnet werden und Derivate der 1,2-Diacylsn-glycerin-3-phosphorsäuren darstellen. Demgegenüber versteht man unter Phospholipiden gewöhnlich Mono- und vorzugsweise Diester der Phosphorsäure mit Glycerin (Glycerinphosphate), die allgemein zu den Fetten gerechnet werden. Daneben kommen auch Sphingosine bzw. Sphingolipide in Frage.

### Perlglanzwachse

Als Perlglanzwachse kommen beispielsweise in Frage: Alkylenglycolester, speziell Ethylenglycoldistearat; Fettsäurealkanolamide, speziell Kokosfettsäurediethanolamid; Partialglyceride, speziell Stearinsäuremonoglycerid; Ester von mehrwertigen, gegebenenfalls hydroxysubstituierte Carbonsäuren mit Fettalkoholen mit 6 bis 22 Kohlenstoffatomen, speziell langkettige Ester der Weinsäure; Fettstoffe, wie beispielsweise Fettalkohole, Fettketone, Fettaldehyde, Fettether und Fettcarbonate, die in Summe mindestens 24 Kohlenstoffatome aufweisen, speziell Lauron und Distearylether; Fettsäuren wie Stearinsäure, Hydroxystearinsäure oder Behensäure, Ringöffnungsprodukte von Olefinepoxiden mit 12 bis 22 Kohlenstoffatomen mit Fettalkoholen mit 12 bis 22 Kohlenstoffatomen und/oder Polyolen mit 2 bis 15 Kohlenstoffatomen und 2 bis 10 Hydroxylgruppen sowie deren Mischungen.

### Konsistenzgeber und Verdickungsmittel

Als Konsistenzgeber kommen in erster Linie Fettalkohole oder Hydroxyfettalkohole mit 12 bis 22 und vorzugsweise 16 bis 18 Kohlenstoffatomen und daneben Partialglyceride, Fettsäuren oder Hydroxyfettsäuren in Betracht. Bevorzugt ist eine Kombination dieser Stoffe mit Alkyloligoglucosiden und/oder Fettsäure-N-methylglucamiden gleicher Kettenlänge und/oder Polyglycerinpoly-12-hydroxystearaten. Geeignete Verdickungsmittel sind beispielsweise Aerosil-Typen (hydrophile Kieselsäuren), Polysaccharide, insbesondere Xanthan-Gum, Guar-Guar, Agar-Agar, Alginate und Tylosen, Carboxymethylcellulose und Hydroxyethylcellulose, ferner höhermolekulare Polyethylenglycolmono- und -diester von Fettsäuren, Polyacrylate, (z.B. Carbopole® und Pemulen-Typen von Goodrich; Synthalene® von Sigma; Keltrol-Typen von Kelco; Sepigel-Typen von Seppic; Salcare-Typen von Allied Colloids), Polyacrylamide, Polymere, Polyvinylalkohol und Polyvinylpyrrolidon, Tenside wie beispielsweise ethoxylierte Fettsäureglyceride, Ester von Fettsäuren mit Polyolen wie beispielsweise Pentaerythrit oder Trimethylolpropan, Fettalkoholethoxylate mit eingeengter Homologenverteilung oder Alkyloligoglucoside sowie Elektrolyte wie Kochsalz und Ammoniumchlorid.

### Überfettungsmittel

Als Überfettungsmittel können Substanzen wie beispielsweise Lanolin und Lecithin sowie polyethoxylierte oder acylierte Lanolin- und Lecithinderivate, Polyolfettsäureester, Monoglyceride und Fettsäurealkanolamide verwendet werden, wobei die letzteren gleichzeitig als Schaumstabilisatoren dienen.

### Stabilisatoren

Als Stabilisatoren können Metallsalze von Fettsäuren, wie z.B. Magnesium-, Aluminium- und/oder Zinkstearat bzw. -ricinoleat eingesetzt werden.

### Siliconverbindungen

Geeignete Siliconverbindungen sind beispielsweise Dimethylpolysiloxane, Methylphenylpolysiloxane, cyclische Silicone sowie amino-, fettsäure-, alkohol-, polyether-, epoxy-, fluor-, glykosid- und/oder alkylmodifizierte Siliconverbindungen, die bei Raumtemperatur sowohl flüssig als auch harzförmig vorliegen können. Weiterhin geeignet sind Simethicone, bei denen es sich um Mischungen aus Dimethiconen mit einer durchschnittlichen Kettenlänge von 200 bis 300 Dimethylsiloxan-Einheiten und hydrierten Silicaten handelt. Eine detaillierte Übersicht über geeignete flüchtige Silicone findet sich zudem von Todd et al, in **Cosm.Toil. 91, 27 (1976).**

### Antioxidantien

Es können auch Antioxidantien zugesetzt werden, die die photochemische Reaktionskette unterbrechen, welche ausgelöst wird, wenn UV-Strahlung in die Haut eindringt. Typische Beispiele hierfür sind Aminosäuren (z.B. Glycin, Histidin, Tyrosin, Tryptophan) und deren Derivate, Imidazole (z.B. Urocaninsäure) und deren Derivate, Peptide wie D,L-Camosin, D-Carnosin, L-Carnosin und deren Derivate (z.B. Anserin), Carotinoide, Carotine (z.B. α-Carotin, β-Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Butioninsulfone, Penta-, Hexa-, Heptathioninsulfoximin) in sehr geringen verträglichen Dosierungen (z.B. pmol bis µmol/kg), ferner (Metall)-Chelatoren (z.B. α-Hydroxyfettsäuren, Palmitinsäure, Phytinsäure, Lactoferrin), α-Hydroxysäuren (z.B. Citronensäure, Milchsäure, Äpfelsäure), Huminsäure, Gallensäure, Gallenextrakte, Bilirubin, Biliverdin, EDTA, EGTA und deren Derivate, ungesättigte Fettsäuren und deren Derivate (z.B. γ-Linolensäure, Linolsäure, Ölsäure), Folsäure und deren Derivate, Ubichinon und Ubichinol und deren Derivate, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Koniferylbenzoat des Benzoeharzes, Rutinsäure und deren Derivate, α-Glycosylrutin, Ferulasäure, Furfurylidenglucitol, Carnosin, Butylhydroxytoluol, Butylhydroxyanisol, Nordihydroguajakharzsäure, Nordihydroguajaretsäure, Trihydroxybutyrophenon, Harnsäure und deren Derivate, Mannose und deren Derivate, Superoxid-Dismutase, Zink und dessen Derivate (z.B. ZnSO₄) Selen und dessen Derivate (z.B. Selen-Methionin), Stilbene und deren Derivate (z.B. Stilbenoxid, trans-Stilbenoxid) und die erfindungsgemäß geeigneten Derivate (Salze, Ester, Ether, Zucker, Nukleotide, Nukleoside, Peptide und Lipide) dieser genannten Wirkstoffe.

### Quellmittel

Als Quellmittel für wässrige Phasen können Montmorillonite, Clay Mineralstoffe, Pemulen sowie alkylmodifizierte Carbopoltypen (Goodrich) dienen. Weitere geeignete Polymere bzw. Quellmittel können der Übersicht von R.Lochhead in **Cosm.Toil.108, 95** (1993) entnommen werden.

### Hydrotrope

Zur Verbesserung des Fließverhaltens können ferner Hydrotrope, wie beispielsweise Ethanol, Isopropylalkohol, oder Polyole eingesetzt werden. Polyole, die hier in Betracht kommen, besitzen vorzugsweise 2 bis 15 Kohlenstoffatome und mindestens zwei Hydroxylgruppen. Die Polyole können noch weitere funktionelle Gruppen, insbesondere Aminogruppen, enthalten bzw. mit Stickstoff modifiziert sein. Typische Beispiele sind
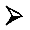 Glycerin;
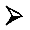 Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
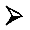 technische Oligoglyceringemische mit einem Eigenkondensationsgrad von 1,5 bis 10 wie etwa technische Diglyceringemische mit einem Diglyceringehalt von 40 bis 50 Gew.-%;
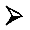 Methyolverbindungen, wie insbesondere Trimethylolethan, Trimethylolpropan, Trimethylolbutan, Pentaerythrit und Dipentaerythrit;
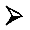 Niedrigalkylglucoside, insbesondere solche mit 1 bis 8 Kohlenstoffen im Alkylrest, wie beispielsweise Methyl- und Butylglucosid;
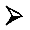 Zuckeralkohole mit 5 bis 12 Kohlenstoffatomen, wie beispielsweise Sorbit oder Mannit,
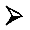 Zucker mit 5 bis 12 Kohlenstoffatomen, wie beispielsweise Glucose oder Saccharose;
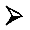 Aminozucker, wie beispielsweise Glucamin;
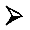 Alkoholamine, wie Diethanolamin, Triethanolamin oder 2-Amino-1,3-propandiol.

### Konservierungsmittel

Als Konservierungsmittel eignen sich beispielsweise Phenoxyethanol, Formaldehydlösung, Parabene, Pentandiol oder Sorbinsäure sowie die in Anlage 6, Teil A und B der Kosmetikverordnung aufgeführten weiteren Stoffklassen.

### Parfümöle

Als Parfümöle seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, α-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, β-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilllat, Irotyl und Floramat allein oder in Mischungen, eingesetzt.

### Farbstoffe

Als Farbstoffe können die für kosmetische Zwecke geeigneten und zugelassenen Substanzen verwendet werden, wie sie beispielsweise in der Publikation "Kosmetische Färbemittel" der Farbstoffkommission der Deutschen Forschungsgemeinschaft, Verlag Chemie, Weinheim, 1984, S.81-106 zusammengestellt sind. Diese Farbstoffe werden üblicherweise in Konzentrationen von 0,001 bis 0,1 Gew.-%, bezogen auf die gesamte Mischung, eingesetzt.

Der Gesamtanteil der Hilfs- und Zusatzstoffe kann 1 bis 80, vorzugsweise 5 bis 50 und insbesondere 7 bis 10 Gew.-% - bezogen auf die Mittel - betragen. Die Herstellung der Mittel kann durch übliche Kalt - oder Heißemulgierungen oder aber nach dem PIT-Verfahren erfolgen.

### Beispiele

### Vergleiches beispiel

### 1: Herstellung eine Tensidmischung aus C₁₂-C₁₈-Acylglutamat-di-Natriumsalz und C₁₂₋C₁₈-Acylproteinkondensat auf Basis von Weizenproteinhydrolysat

In einem Reaktor werden 76 g Wasser, 187 g (1 Mol) Mononatriumglutamat (x 1 H₂O), 103 g 37 %ige Natronlauge und 30 g Weizenproteinhydrolysat (56 Gew.-% Aktivsubstanz, 0.8 Gew.-% acylierbarer Stickstoff) vorgelegt und auf 10 bis 20 °C abgekühlt. Der pH-Wert wird vor Reaktionsstart mit 11%iger Natronlauge auf ca. 12 eingestellt. Anschliessend werden 208 g (0,95 Mol) Cocoylfettsäurechlorid und 308 g 11 %ige NaOH simultan so zudosiert, dass die Reaktortemperatur 20 bis 25 °C nicht übersteigt und der pH-Wert zwischen 11,5 und 12,5 liegt. Nach Zugabe des Feftsäurechlorids rührt man unter gleichzeitiger Umwälzung (über die Kreislaufleitung mit Mischer und Wärmetauscher) im Reaktor noch ca. 2 Stunden bei 20 bis 25 °C nach und erhitzt dann weitere ca. 2 Std. auf 60 bis 80 °C.
Danach lässt man auf Raumtemperatur abkühlen und stellt den pH-Wert des Reaktionsgemischs durch Zugabe verdünnter Salzsäure auf ca. 10 ein.

### Beispiel 2: Herstellung eine Tensidmischung aus C₁₂-C₁₈-Acylglutamat-di-Natriumsalz und C₁₂₋C₁₄- Alkylpolyglucosid

In einem Reaktor werden 76 g Wasser, 187 g (1 Mol) Mononatriumglutamat (x 1 H₂O), 103 g 37 %ige Natronlauge und 56 g C₁₂-C₁₄-Alkylpolyglucosid (50% AS) vorgelegt und auf 10 bis 20°C abgekühlt. Der pH-Wert wird vor Reaktionsstart mit 11%iger Natronlauge auf ca. 12 eingestellt. Anschliessend werden 177 g (0,8 Mol) Cocoylfettsäurechlorid und 296 g 11%ige NaOH simultan so zudosiert, dass die Reaktortemperatur 20 bis 25 °C nicht übersteigt und der pH-Wert zwischen 11,5 und 12,5 liegt. Nach Zugabe des Fettsäurechlorids rührt man unter gleichzeitiger Umwälzung (über die Kreislaufleitung mit Mischer und Wärmetauscher) im Reaktor noch ca. 2 Stunden bei 20 bis 25 °C nach und erhitzt dann weitere ca. 2 Std. auf 60 bis 80°C.
Danach lässt man auf Raumtemperatur abkühlen und stellt den pH-Wert des Reaktionsgemischs durch Zugabe verdünnter Salzsäure auf ca.10 ein.

### Beispiel 3: Herstellung eine Tensidmischung aus C₁₂-C₁₈-Acylglutamat-di-Natriumsalz und C₁₂₋C18- Acyltaurid-Natriumsalz

In einem Reaktor werden 76 g Wasser, 187 g (1 Mol) Mononatriumglutamat (x 1 H₂O), 103 g 37 %ige Natronlauge und 24,8g N-Methytaurin-Na (50% Aktivsubstanz in Wasser) vorgelegt und auf 10 bis 20 °C abgekühlt. Der pH-Wert wird vor Reaktionsstart mit 11%iger Natronlauge auf ca. 12 eingestellt. Anschliessend werden 211 g (0,96 Mol) Cocoylfettsäurechlorid und 352 g 11%ige Na-OH simultan so zudosiert, dass die Reaktortemperatur 20 bis 25 °C nicht übersteigt und der pH-Wert zwischen 11,5 und 12,5 liegt. Nach Zugabe des Fettsäurechlorids rührt man unter gleichzeitiger Umwälzung (über die Kreislaufleitung mit Mischer und Wärmetauscher) im Reaktor noch ca. 2 Stunden bei 20 bis 25 °C nach und erhitzt dann weitere ca. 2 Std. auf 60 bis 80 °C. Danach lässt man auf Raumtemperatur abkühlen und stellt den pH-Wert des Reaktionsgemischs durch Zugabe verdünnter Salzsäure auf ca. 10 ein.

### Beispiel 4: Herstellung eines C₁₂-C₁₈-Acylaspartat-di-Natriumsalzes und C₁₂-C₁₄- Alkylpolyglucosid

In einem Reaktor werden 76 g Wasser, 133 g (1 Mol) Asparaginsäure, 210 g 37 %ige Natronlauge und 56 g C₁₂-C₁₄-Alkylpolyglucosid (50% AS) vorgelegt und auf 10 bis 20°C abgekühlt. Der pH-Wert wird vor Reaktionsstart mit 11 %iger Natronlauge auf ca. 12 eingestellt. Anschliessend werden 177 g (0,8 Mol) Cocoylfettsäurechlorid und 296 g 11 %ige NaOH simultan so zudosiert, dass die Reaktortemperatur 20 bis 25 °C nicht übersteigt und der pH-Wert zwischen 11,5 und 12,5 liegt. Nach Zugabe des Fettsäurechlorids rührt man unter gleichzeitiger Umwälzung (über die Kreislauf leitung mit Mischer und Wärmetauscher) im Reaktor noch ca. 2 Stunden bei 20 bis 25 °C nach und erhitzt dann weitere ca. 2 Std. auf 60 bis 80 °C.
Danach lässt man auf Raumtemperatur abkühlen und stellt den pH-Wert des Reaktionsgemischs durch Zugabe verdünnter Salzsäure auf ca.10 ein.

### Beispiel 5: Herstellung einer Tensidmischung aus C₁₂-C₁₈-Acylglutamat-di-Natriumsalz und C₁₂₋C₁₄- Alkylpolyglucosid und 1,2-Propylenglykol

In einem Reaktor werden 76 g Wasser, 187 g (1 Mol) Mononatriumglutamat (x 1 H₂O), 103 g 37 %ige Natronlauge, 56 g C₁₂-C₁₄-Alkylpolyglucosid (50% AS) und 17g 1,2-Propylenglykol vorgelegt und auf 10 bis 20°C abgekühlt. Der pH-Wert wird vor Reaktionsstart mit 11%iger Natronlauge auf ca. 12 eingestellt. Anschliessend werden 177 g (0,8 Mol) Cocoylfettsäurechlorid und 296 g 11%ige NaOH simultan so zudosiert, dass die Reaktortemperatur 20 bis 25 °C nicht übersteigt und der pH-Wert zwischen 11,5 und 12,5 liegt. Nach Zugabe des Fettsäurechlorids rührt man unter gleichzeitiger Umwälzung (über die Kreislaufleitung mit Mischer und Wärmetauscher) im Reaktor noch ca. 2 Stunden bei 20 bis 25 °C nach und erhitzt dann weitere ca. 2 Std. auf 60 bis 80 °C.
Danach lässt man auf Raumtemperatur abkühlen und stellt den pH-Wert des Reaktionsgemischs durch Zugabe verdünnter Salzsäure auf ca.10 ein.

## Patentansprüche

1. Tensidgemisch, **dadurch** erhältlich, dass man
(a) mindestens eine Aminosäure oder deren Salz mit
(b) Fettsäurechloriden der Formel (I),
**R**^{**1**}**COX** **(I)**
in der R¹ für einen Alkyl- oder Alkenylrest mit 6 bis 22 Kohlenstoffatomen und X für Chor steht, in Gegenwart von
(c) acylierbaren Tensidvorstufen, die ausgewählt sind aus der Gruppe, die gebildet wird von Proteinhydrolysaten mit einem durchschnittlichen Molekulargewicht von 300 bis 2500, Polyaminosäuren, Aminosulfonsäuren und/oder Aminozucker und/oder
(d) nichtionischen Tensiden
sowie Wasser und Alkali in einer Kreislaufleitung mit Mischer umsetzt, wobei das Säurechlorid in oder vor dem Mischer dosiert wird.

2. Mittel nach Anspruch 1, **dadurch gekennzeichnet, dass** man als Aminosäuren Glutaminsäure, Sarkosin, Asparaginsäure, Alanin, Valin, Leucin, Isoleucin, Prolin, Hydroxyprolin, Glycin, Serin, Cystein, Cystin, Threonin, Histidin sowie deren Salze einsetzt.

3. Mittel nach den Ansprüchen 1 und/oder 2, **dadurch gekennzeichnet, dass** man als Proteinhydrolysate Proteinhydrolysate auf Basis von pflanzlichen oder marinen Proteinen sowie von Milch-, Seide- oder Cashmeproteinen, als Polyaminosäuren Polyasparaginsäure mit Oligomerisationsgraden von 2 bis 10, als Aminosulfonsäuren N-Methyltaurin oder Taurin und als Aminozucker Glucamin/Glucosamin oder Galactosamin einsetzt.

4. Mittel nach mindestens einem der Ansprüche 1 bis 3, **dadurch gekennzeichnet, dass** man nichtionische Tenside einsetzt, die ausgewählt sind aus der Gruppe, die gebildet wird von
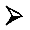 Anlagerungsprodukten von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen, an Alkylphenole mit 8 bis 15 C-Atomen in der Alkylgruppe sowie Alkylamine mit 8 bis 22 Kohlenstoffatomen im Alkylrest;
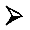 Alkyl- und/oder Alkenyloligoglykosiden mit 8 bis 22 Kohlenstoffatomen im Alk(en)ylrest und deren ethoxylierte Analoga;
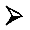 Anlagerungsprodukte von 1 bis 30 Mol Ethylenoxid an Fettsäuren;
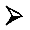 Einschubprodukte von 1 bis 30 Mol Ethylenoxid in Fettsäuremethylester;
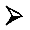 Anlagerungsprodukten von 1 bis 15 Mol Ethylenoxid an Ricinusöl und/oder gehärtetes Ricinusöl;
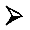 Anlagerungsprodukten von 15 bis 60 Mol Ethylenoxid an Ricinusöl und/oder gehärtetes Ricinusöl;
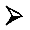 Partialestern von Glycerin und/oder Sorbitan mit ungesättigten, linearen oder gesättigten, verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
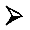 Partialestern von Polyglycerin (durchschnittlicher Eigenkondensationsgrad 2 bis 8), Polyethylenglycol (Molekulargewicht 400 bis 5000), Trimethylolpropan, Pentaerythrit, Zuckeralkoholen (z.B. Sorbit), Alkylglucosiden (z.B. Methylglucosid, Butylglucosid, Laurylglucosid) sowie Polyglucosiden (z.B. Cellulose) mit gesättigten und/oder ungesättigten, linearen oder verzweigten Fettsäuren mit 12 bis 22 Kohlenstoffatomen und/oder Hydroxycarbonsäuren mit 3 bis 18 Kohlenstoffatomen sowie deren Addukte mit 1 bis 30 Mol Ethylenoxid;
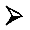 Mischestern aus Pentaerythrit, Fettsäuren, Citronensäure und Fettalkohol gemäß DE 1165574 PS und/oder Mischester von Fettsäuren mit 6 bis 22 Kohlenstoffatomen, Methylglucose und Polyolen, vorzugsweise Glycerin oder Polyglycerin;
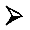 Mono-, Di- und Trialkylphosphaten sowie Mono-, Di- und/oder Tri-PEG-alkylphosphaten und deren Salzen;
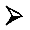 Wollwachsalkoholen;
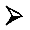 Polysiloxan-Polyalkyl-Polyether-Copolymeren bzw. entsprechenden Derivaten;
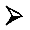 Polyalkylenglycolen sowie
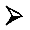 Glycerincarbonaten.

5. Mittel nach mindestens einem der Ansprüche 1 bis 4, **dadurch gekennzeichnet**, als man als weitere Komponente Polyole zusetzt, die ausgewählt sind aus der Gruppe, die gebildet wird von Glycerin, Ethylenglycol, Propylenglycol, Dipropylenglycol, 1,3 Butylenglycol, 1,2-Butandiol, 1,4-Butandiol, Sorbitol, Mannitol, Erythritol, Pentaerythritol.

6. Verfahren zur Herstellung eines Tensidgemisches, **dadurch gekennzeichnet, dass** man
(a) mindestens eine saure Aminosäure oder deren Salz mit
(b) Fettsäurechloriden der Formel (I),
**R**^{**1**}**COX** **(I)**
in der R¹ für einen Alkyl- oder Alkenylrest mit 6 bis 22 Kohlenstoffatomen und X für Chlor steht, in Gegenwart von
(c) acylierbaren Tensidvorstufen, die ausgewählt sind aus der Gruppe, die gebildet wird von Proteinhydrolysaten mit einem mittleren Molekulargewicht von 300 bis 2500, Polyaminosäuren, Aminosulfonsäuren und/oder Aminozucker und/oder
(d) nichtionischen Tensiden
sowie Wasser und Alkali in einer Kreislaufleitung mit Mischer umsetzt, wobei das Säurechlorid in oder vor dem Mischer dosiert wird.

7. Verwendung eines Tensidgemischs nach Anspruch 1 als Reinigungsmittel.

8. Verwendung eines Tensidgemischs nach Anspruch 1 als Schäumungsmittel.

9. Verwendung eines Tensidgemischs nach Anspruch 1 als Emulgator.

## Claims

1. A surfactant mixture obtainable by reacting
(a) at least one amino acid or a salt thereof with
(b) fatty acid chlorides corresponding to formula (I):
**R**^{**1**}**COX** **(I)**
in which R¹ is an alkyl or alkenyl group containing 6 to 22 carbon atoms and X represents chlorine, in the presence of
(c) acylatable surfactant precursors selected from the group consisting of protein hydrolyzates with an average molecular weight of 300 to 2500, polyamino acids, aminosulfonic acids and/or amino sugars and/or
(d) nonionic surfactants
and water and alkali in a circulation pipe incorporating a mixer, the acid chloride being added to or before the mixer.

2. A mixture as claimed in claim 1, **characterized in that** glutamic acid, sarcosine, aspartic acid, alanine, valine, leucine, isoleucine, proline, hydroxyproline, glycine, serine, cysteinee, cystine, threonine, histidine and salts thereof are used as the amino acids.

3. A mixture as claimed in claims 1 and/or 2 **characterized in that** protein hydrolyzates based on vegetable or marine proteins and on milk, silk or cashmere proteins are used as the protein hydrolyzates and polyaspartic acid with degrees of oligomerization of 2 to 10 as the polyamino acids, N-methyl taurine or taurine as the aminosulfonic acids and glucamine/glucosamine or galactosamine as the amino sugars.

4. A mixture as claimed in at least one of claims 1 to 3, **characterized in that** nonionic surfactants selected from the group consisting of
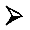 products of the addition of 2 to 30 mol ethylene oxide and/or 0 to 5 mol propylene oxide onto linear or branched C₈₋₂₂ fatty alcohols, onto C₁₂₋₂₂ fatty acids, onto alkyl phenols containing 8 to 15 carbon atoms in the alkyl group and alkylamines containing 8 to 22 carbon atoms in the alkyl group;
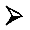 alkyl and/or alkenyl oligoglycosides containing 8 to 22 carbon atoms in the alk(en)yl group and ethoxylated analogs thereof;
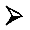 addition products of 1 to 30 mol ethylene oxide onto fatty acids;
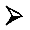 insertion products of 1 to 30 mol ethylene oxide into fatty acid methyl esters;
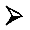 addition products of 1 to 15 mol ethylene oxide onto castor oil and/or hydrogenated castor oil;
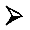 addition products of 15 to 60 mol ethylene oxide onto castor oil and/or hydrogenated castor oil;
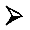 partial esters of glycerol and/or sorbitan with unsaturated, linear or saturated, branched fatty acids containing 12 to 22 carbon atoms and/or hydroxycarboxylic acids containing 3 to 18 carbon atoms and adducts thereof with 1 to 30 mol ethylene oxide;
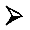 partial esters of polyglycerol (average degree of self-condensation 2 to 8), polyethylene glycol (molecular weight 400 to 5,000), trimethylolpropane, pentaerythritol, sugar alcohols (for example sorbitol), alkyl glucosides (for example methyl glucoside, butyl glucoside, lauryl glucoside) and polyglucosides (for example cellulose) with saturated and/or unsaturated, linear or branched fatty acids containing 12 to 22 carbon atoms and/or hydroxycarboxylic acids containing 3 to 18 carbon atoms and adducts thereof with 1 to 30 mol ethylene oxide;
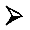 mixed esters of pentaerythritol, fatty acids, citric acid and fatty alcohol according to DE 11 65 574 PS and/or mixed esters of fatty acids containing 6 to 22 carbon atoms, methyl glucose and polyols, preferably glycerol or polyglycerol,
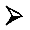 mono-, di- and trialkyl phosphates and mono-, di- and/or tri-PEG-alkyl phosphates and salts thereof,
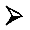 wool wax alcohols,
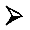 polysiloxane/polyalkyl/polyether copolymers and corresponding derivatives,
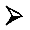 polyalkylene glycols and
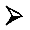 glycerol carbonates
are used.

5. A mixture as claimed in at least one of claims 1 to 4, **characterized in that** polyols selected from the group consisting of glycerol, ethylene glycol, propylene glycol, dipropylene glycol, 1,3-butylene glycol, butane-1,2-diol, butane-1,4-diol, sorbitol, mannitol, erythritol, pentaerythritol are used as an additional component.

6. A process for the production of a surfactant mixture, **characterized in that**
(a) at least one amino acid or a salt thereof is reacted with
(b) fatty acid chlorides corresponding to formula (I):
**R**^{**1**}**COX** **(I)**
in which R¹ is an alkyl or alkenyl group containing 6 to 22 carbon atoms and X represents chlorine, in the presence of
(c) acylatable surfactant precursors selected from the group consisting of protein hydrolyzates with an average molecular weight of 300 to 2500, polyamino acids, aminosulfonic acids and/or amino sugars and/or
(d) nonionic surfactants
and water and alkali in a circulation pipe incorporating a mixer, the acid chloride being added to or before the mixer.

7. The use of the surfactant mixture claimed in claim 1 as a cleaner.

8. The use of the surfactant mixture claimed in claim 1 as a foaming agent.

9. The use of the surfactant mixture claimed in claim 1 as an emulsifier.

## Revendications

1. Mélange tensioactif que l'on peut obtenir en faisant réagir
(a) au moins un aminoacide ou son sel avec
(b) des chlorures d'acide gras répondant à la formule (I)
**R**^{**1**} **COX** (I)
dans laquelle R¹ représente un radical alkyle ou alcényle comportant 6 à 22 atomes de carbone et X représente un atome de chlore, en présence
(c) de précursseurs de tensioactifs acylables, choisis dans le groupe constitué d'hydrolysats de protéines de poids moléculaire moyen de 300 à 2500, de polyaminoacides, d'acides aminosulfoniques et/ou d'aminosucres, et/ou
(d) de tensioactifs non ioniques,
et de l'eau et de l'alcali dans une conduite de circulation en circuit fermé avec mélangeur, le chlorure d'acide étant ajouté dans ou avant le mélangeur.

2. Produit selon la revendication 1,
**caractérisé en ce que**
comme aminoacides, on utilise l'acide glutamique, la sarcosine, l'acide asparagique, l'alanine, la valine, la leucine, l'isoleucine, la proline, l'hydroxyproline, la glycine, la sérine, la cystéine, la cystine, la thréonine, l'histidine ainsi que leurs sels.

3. Produit selon les revendication 1 et/ou 2,
**caractérisé en ce que**
comme hydrolysats de protéines, on utilise des hydrolysats de protéines à base de protéines végétales ou marines ainsi que des protéines de lait, de soie ou de cachemire, comme polyaminoacides on utilise un acide polyasparagique présentant des degrés d'oligomérisation de 2 à 10, comme acides aminosulfoniques on utilise la N-méthyltaurine ou la traurine, et comme aminosucre on utilise la glucamine/glucosamine ou la galactosamine.

4. Produit selon au moins une des revendications 1 à 3,
**caractérisé en ce qu'**
on utilise des tensioactifs non ioniques choisis dans le groupe constitué des composés suivants:
• produits d'addition de 2 à 30 moles d'oxyde d'éthylène et/ou de 0 à 5 moles d'oxyde de propylène à des alcools gras linéaires comportant de 8 à 22 atomes de carbone, à des acides gras comportant de 12 à 22 atomes de carbone, à des alkylphénols comportant de 8 à 15 atomes de carbone dans le radical alkyle ainsi que des alkylamines comportant de 8 à 22 atomes de carbone dans le radical alkyle ;
• alkyl- et/ou alcényloligoglycosides comportant 8 à 22 atomes de carbone dans le radical alc(én)yle et leurs analogues éthoxylés ;
• produits d'addition de 1 à 30 moles d'oxyde d'éthylène à des acides gras ;
• produits d'incorporation de 1 à 30 moles d'oxyde d'éthylène dans des esters méthyliques d'acides gras ;
• produits d'addition de 1 à 15 moles d'oxyde d'éthylène à de l'huile de ricin et/ ou à de l'huile de ricin durcie ;
• produits d'addition de 15 à 60 moles d'oxyde d'éthylène à de l'huile de ricin et/ou à de l'huile de ricin durcie ;
• esters partiels de glycérol et/ou de sorbitane et d'acides gras linéaires ou ramifiés, saturés ou insaturés, comportant 12 à 22 atomes de carbone et/ou d'acides hydroxycarboxyliques comportant 3 à 18 atomes de carbone ainsi que leurs produits d'addition avec 1 à 30 moles d'oxyde d'éthylène ;
• esters partiels de polyglycérol (degré de condensation propre moyen de 2 à 8), polyéthylèneglycol (poids moléculaire 400 à 5000), triméthylolpropane, pentaérythrite, alcools de sucres (par exemple sorbitol), alkylglucosides (par exemple méthylglucoside, butylglucoside, laurylglucoside) ainsi que polyglucosides (par exemple cellulose) et d'acides gras linéaires ou ramifiés, saturés et/ou insaturés, comportant 12 à 22 atomes de carbone et/ou d'acides hydroxycarboxyliques comportant 3 à 18 atomes de carbone ainsi que leurs produits d'addition avec 1 à 30 moles d'oxyde d'éthylène ;
• esters mixtes de pentaérythrite, acides gras, acide citrique et alcool gras selon DE 11 655 74 PS et/ou esters mixtes d'acides gras comportant 6 à 22 atomes de carbone, méthylglucose et polyols, de préférence glycérol ou polyglycérol ;
• mono-, di- et trialkylphosphates ainsi que mono-, di- et/ou tri-PEG-alkylphosphates et leurs sels ;
• alcools de cire de laine ;
• copolymères polysiloxane-polyalkyle-polyéther ou dérivés correspondants ;
• polyalkylèneglycols ainsi que
• carbonates de glycérol.

5. Produit selon au moins une des revendications 1 à 4,
**caractérisé en ce que**
comme autres composants, on ajoute des polyols choisis dans le groupe constitué du glycérol, de l'éthylèneglycol, du propylèneglycol, du dipropylèrieglycol, du 1,3-butylèneglycol, du 1,2-butanediol, du 1,4-butariediol, du sorbitol, du mannitol, de l'érythritol, du pentaérythritol.

6. Procédé pour la préparation d'un mélange tensioactif,
**caractérisé en ce qu'**
on fait réagir :
(a) au moins un aminoacide acide ou son sel avec
(b) des chlorures d'acides gras répondant à la formule (I)
R¹ COX (I)
dans laquelle R¹ représente un radical alkyle ou alcényle comportant 6 à 22 atomes de carbone et X représente un atome de chlore, en présence
(c) de précurseurs de tensioactifs acylables, choisis dans le groupe constitué d'hydrolysats de protéines de poids moléculaire moyen de 300 à 2500, de polyaminoacides, d'acides aminosulfoniques et/ou d'aminosucres, et / ou
(d) de tensioactifs non ioniques,
et de l'eau et une substance alcaline dans une conduite de circulation en circuit fermé avec mélangeur, le chlorure d'acide étant ajouté dans ou avant le mélangeur.

7. Utilisation d'un mélange tensioactif selon la revendication 1, comme produit de nettoyage.

8. Utilisation d'un mélange tensioactif selon la revendication 1, comme agent moussant.

9. Utilisation d'un mélange tensioactif selon la revendication 1, comme émulsionnant.
